# FASCICULE DE BREVET EUROPEEN

(11) **EP 3 559 378 B1**
(45) Date de publication et mention de la délivrance du brevet: **25.11.2020**
(21) Numéro de dépôt: 17832259.0
(22) Date de dépôt: 19.12.2017
(51) Int. Cl.: E04H 4/12

(54) **VANNE COMPACTE MULTIVOIE DE RACCORDEMENT ENTRE DEUX CIRCUITS DE CIRCULATION DE FLUIDE**
KOMPAKTES MEHRWEGEVENTIL ZUR VERBINDUNG ZWEIER FLUIDZIRKULATIONSKREISLÄUFE
COMPACT MULTI-WAY VALVE FOR CONNECTING TWO FLUID-CIRCULATION CIRCUITS

(30) Priorité: 20.12.2016 FR 1662923
(43) Date de publication de la demande: 30.10.2019
(73) Titulaire: Zodiac Pool Care Europe, 69500 Bron (FR)
(72) Inventeur: LEROYER, Brice, 49100 Angers (FR); PICHON, Philippe, 31800 Villeneuve De Riviere (FR)
(74) Mandataire: Ipside
(86) Numéro de dépôt international: PCT/FR2017/053692
(87) Numéro de publication internationale: WO 2018/115713

(56) Documents cités:
- DE-A1- 2 540 435
- FR-A- 1 227 909
- FR-A1- 2 891 590
- US-A- 4 313 428
- US-A- 4 371 003
- US-A1- 2006 231 146

## Description

### DOMAINE TECHNIQUE DE L'INVENTION

La présente invention relève du domaine des équipements pour piscines. Elle concerne plus particulièrement une vanne multivoies permettant d'alimenter un équipement de piscine monté en dérivation sur le circuit de filtration principal d'une piscine.

### ETAT DE LA TECHNIQUE

Un circuit de filtration principal connu de l'art antérieur comprend, au minimum, des moyens de captage de l'eau de la piscine (bonde de fond ou skimmer), au moins un moyen de pompage de l'eau du bassin, au moins un moyen de filtration de l'eau de piscine et des moyens de refoulement de l'eau dans la piscine (buses).

Des tuyaux en plastique rigide ou souple relient ces différents équipements afin de fermer le circuit hydraulique principal de la piscine. Pour faciliter l'entretien et augmenter la période d'utilisation de la piscine, des équipements permettant le traitement automatique de l'eau et le chauffage de l'eau ont été développés.

La plupart de ces équipements sont montés en dérivation sur le circuit de filtration principal. Un système de *bypass* (ou by-pass, de l'anglais «dérivation ») comprenant trois vannes distinctes est installé pour chacun de ces équipements. Une première vanne est située sur le circuit principal, encadrée par un piquage amont, définissant l'entrée du circuit en dérivation, sur lequel une deuxième vanne est installée et un piquage aval, définissant la fin du circuit en dérivation, sur lequel une troisième vanne est installée. La vanne située sur circuit principal permet d'ajuster le débit dans l'équipement situé en dérivation. La troisième vanne, située en aval de l'équipement situé en dérivation, permet d'ajuster la pression dans l'équipement et permet avec la vanne située en amont de l'équipement d'isoler ce dernier du circuit principal.

De plus, les vannes classiques ne comportent pas d'indicateur d'ouverture de telle sorte qu'en cas de manipulation, pour un hivernage par exemple, l'utilisateur aura des difficultés pour retrouver le réglage initial. De plus, ce système est encombrant, coûteux et nécessite un temps d'installation important. Ce point est d'autant plus critique lorsqu'il s'agît de l'installation de cet équipement sur un circuit de filtration principal déjà existant où il n'existe pas la place nécessaire pour l'implantation du bypass. Le brevet US4279128 montre un tel équipement motorisé associé à un système de chauffage de la piscine.

Par ailleurs, des vannes multivoies existent. De telles vannes sont utilisées pour permettre le nettoyage et gérer l'utilisation du système de filtration. Les brevets US2006/231146, EP0909911 et EP1783408 décrivent de telles vannes multivoies. Ces vannes connectent deux circuits de telle sorte que la totalité du fluide sortant du circuit amont d'alimentation se retrouve dans le circuit aval.

Aucunes des solutions actuelles ne permettent cependant de répondre à tous les besoins requis, à savoir de proposer un dispositif compact et peu coûteux apte, en un seul geste, a diriger sélectivement tout ou partie du flux sortant d'un circuit principal d'alimentation en liquide vers un circuit d'alimentation secondaire, le flux restant étant dirigé vers l'évacuation de liquide du circuit principal.

### OBJET DE L'INVENTION

La présente invention a pour objectif de répondre au moins en partie aux limitations de l'art antérieur précédemment évoquées.

Ainsi, l'invention concerne une vanne multivoies permettant d'alimenter un équipement monté en dérivation sur le circuit de filtration principal de la piscine tel qu'un équipement de chauffage ou un équipement de traitement de l'eau de piscine.

L'invention propose de remplacer les systèmes proposés par l'art antérieur par une vanne de raccordement compacte réalisant toutes les fonctions des trois vannes habituellement utilisées. Une vanne selon l'invention peut comporter en outre un indicateur de réglage indiquant la proportion d'ouverture du circuit en dérivation de telle sorte qu'il sera très aisé pour l'utilisateur de manipuler la vanne et de revenir à un réglage initial. Cette vanne présente en outre les avantages d'être très compacte et peu coûteuse.

Selon un premier aspect, l'invention concerne une vanne de raccordement, comportant au moins quatre connexions pour tube de circulation de fluide, qui comporte un unique organe de commande adaptée à permettre la création sélective de plusieurs configurations de canaux de communication au sein de la vanne entre certaines des connexions pour tube, dont au moins :
- une première configuration dans laquelle une première connexion pour tube, dite "entrée principale", est mise en relation avec uniquement une deuxième connexion pour tube, dite "sortie principale",
- une deuxième configuration dans laquelle l'entrée principale est mise en relation avec une troisième connexion pour tube, dite "sortie de dérivation", et une quatrième connexion pour tube, dite "retour de dérivation", est mise en relation avec la sortie principale, et
- une troisième configuration dans laquelle l'entrée principale est mise en relation à la fois avec la sortie principale et avec la sortie de dérivation, et le retour de dérivation est mis en relation avec la sortie principale.

Grâce à ces dispositions, la vanne objet de l'invention permet à un utilisateur, en un seul geste, de distribuer sélectivement un flux de liquide d'une alimentation d'un circuit principal vers l'alimentation d'un circuit de dérivation, ou vers l'évacuation du circuit principal ou de partager le flux de liquide entre l'alimentation du circuit de dérivation et l'évacuation du circuit principal.

Dans un exemple de mise en œuvre, le flux de liquide distribué par l'alimentation du circuit principal provient de l'eau pompée depuis une piscine par des moyens de pompage et de captage, tels que des bonde de fond ou skimmers (anglicisme de «écumoire») et le liquide dirigé vers l'évacuation du circuit principal est évacué dans la piscine par des moyens de refoulement de l'eau, des buses par exemple. Le circuit principal comporte préférentiellement un équipement de filtration. Des tuyaux rigide ou souple relient ces différents équipements afin de fermer le circuit hydraulique principal de la piscine.

Avantageusement, le circuit de dérivation, aussi appelé circuit secondaire, alimente un équipement de piscine tel qu'un équipement de traitement automatique de l'eau et/ou un équipement de chauffage de l'eau, par exemple une pompe à chaleur. La vanne objet de la présente invention située sur circuit principal permet d'ajuster le débit dans l'équipement situé en dérivation.

Dans des modes de réalisation, ladite vanne de raccordement est adaptée en outre à permettre la création d'une quatrième configuration dans laquelle chacune des connexions pour tube est isolée des autres.

Grâce à ces dispositions, le flux de liquide en provenance de la première connexion pour tube, dite "entrée principale" peut être bloqué. Cette configuration permet de stopper complètement le flux de liquide aussi bien dans le circuit principal que dans le circuit de dérivation. Cette configuration est avantageuse pour stopper la circulation de liquide aussi bien dans le circuit principal que dans le circuit de dérivation, par exemple lors de l'arrêt de fonctionnement de la piscine pour un hivernage complet - la pompe de filtration n'est plus alimentée - ou lors d'une opération de maintenance sur un équipement du circuit principal.

La première configuration correspond à une configuration d'hivernage partiel - la pompe est démarrée au moins une fois par jour pour éviter la création d'un bouchon de glace dans le circuit principal et le circuit en dérivation est isolé et vidangé - ou lors d'une opération de maintenance sur l'équipement monté en dérivation.

Dans des modes de réalisation, la troisième configuration de la vanne permet de faire varier, de manière continue ou séquentielle, la proportion du fluide provenant de l'entrée principale orienté vers la sortie de dérivation, le débit restant étant orienté vers la sortie principale.

Dans des modes de réalisation, la vanne objet de l'invention comporte un corps de vanne percé des quatre connexions pour tube de circulation de fluide et l'organe de commande est monté mobile en rotation, la position angulaire de l'organe de commande réglant la proportion de fluide dirigée depuis l'entrée principale vers la sortie principale et la proportion de fluide dérivée vers la sortie de dérivation, le fluide dérivé étant dirigé vers le retour de dérivation qui se déverse à son tour dans un compartiment agencé dans le corps de vanne où le fluide dérivé se mélange au fluide dirigé vers la sortie principale.

Dans des modes de réalisation, le fluide en provenance de l'entrée principale se déverse dans le corps de vanne, et le corps de vanne est subdivisé en une pluralité de compartiments l'un au moins étant relié a la sortie principale et l'un au moins étant relié à la sortie de dérivation, l'organe de commande comportant une ouverture qui oriente l'écoulement du fluide par mise en regard de la ouverture avec l'un au moins des compartiments.

Dans des modes de réalisation, le compartiment relié a la sortie principale et le compartiment relié à la sortie de dérivation sont montés de sorte que la ouverture de l'organe de commande peut être positionnée chevauchante entre lesdits compartiments pour faire varier le débit orienté vers la sortie de dérivation de 0% à 100%, le débit restant étant orienté vers la sortie principale.

Dans des modes de réalisation, l'organe de sélection comporte un obturateur configuré pour bloquer, en coopération avec le corps de vanne, l'écoulement du fluide lorsqu'il est positionné en regard de la connexion pour tube raccordée à l'entrée principale.

Ce mode de réalisation permet la mise en œuvre de la quatrième configuration de la vanne dans laquelle chacune des connexions pour tube est isolée des autres

Dans des modes de réalisation, la vanne comporte une poignée de préhension solidaire de l'organe de commande facilitant sa mise en rotation par un opérateur.

Dans des modes de réalisation, la vanne comporte au moins un indicateur visuel de la position de l'organe de commande.

Grâce à ces dispositions, l'invention permet à un utilisateur de constater en un coup d'œil la position de l'organe de commande. Avantageusement l'indicateur visuel indique la distribution du débit de liquide entre le circuit principal et le circuit de dérivation.

Dans des modes de réalisation, la vanne comporte un moyen motorisé assurant la rotation de l'organe de commande.

Grâce à ces dispositions, la manipulation de la vanne objet de l'invention est facilitée. La mise en rotation de l'organe de commande ne nécessite pas d'effort physique de la part de l'utilisateur. La mise en œuvre de moyens motorisés assurant la rotation de l'organe de commande est également utile pour un pilotage à distance ou un pilotage automatisé de la vanne.

Dans des modes de réalisation, la vanne comporte au moins un capteur mesurant une donnée physique représentative d'un état du fluide et une unité centrale pilotant le moyen motorisé en fonction de la donnée physique mesurée par le capteur.

Dans l'exemple d'une mise en œuvre de la vanne objet de l'invention pour une piscine, les données physiques représentatives d'un état du fluide sont relevées par un ou plusieurs capteurs pouvant être disposés dans le circuit hydraulique associé au bassin ou dans le bassin lui-même.

Quelques exemples de données physiques représentatives d'un état du fluide incluent le débit dans le circuit principal, la température, le pH (potentiel hydrogène), la concentration en un produit contaminant ou en un produit d'entretien pour piscine, la turbidité ou encore la colorimétrie.

Ces dispositions permettent un pilotage automatisé de la vanne en fonction de l'état du fluide en suivant des règles déterminées. Ces règles peuvent être des boucles de commandes bien connues. Dans un exemple de réalisation, lors de la mesure d'une température inférieure à une valeur seuil un flux de liquide plus important est dirigé vers une pompe à chaleur montée sur le circuit en dérivation.

Dans des modes de réalisation, la vanne comporte des moyens de détection de la position de l'organe de commande et des moyens de transmission de la position de l'organe de commande à un serveur distant.

Dans des modes de réalisation, la vanne est adaptée à être pilotée à distance par un opérateur au moyen d'un terminal portable intelligent.

Selon un deuxième aspect, l'invention concerne une piscine comportant un bassin, des moyens de captage de l'eau et des moyens de refoulement de l'eau dans le bassin, un circuit hydraulique principal faisant circuler l'eau au travers d'une unité de filtration au moyen d'une pompe, ladite piscine comportant en outre un circuit hydraulique secondaire d'alimentation d'un équipement de piscine monté en dérivation sur le circuit principal au moyen d'une vanne de raccordement selon l'invention.

Les avantages, but et caractéristiques d'une piscine équipée d'une vanne objet de l'invention, étant similaires à ceux de la vanne objet de l'invention, ils ne sont pas rappelés ici.

### PRESENTATION DES FIGURES

D'autres avantages, buts et caractéristiques particuliers de la présente invention ressortiront de la description non limitative qui suit d'au moins un mode de réalisation particulier des dispositifs, procédés et systèmes objets de la présente invention, en regard des dessins annexés, dans lesquels :
- la figure 1 représente, schématiquement et en vue perspective, un mode de réalisation particulier de la vanne objet de l'invention,
- la figure 2 représente, schématiquement et en vue de dessus, un mode de réalisation particulier de la vanne objet de l'invention,
- les figures 3 et 4 représentent, schématiquement, en coupe partielle et en vue perspective, un mode de réalisation particulier de la vanne objet de l'invention dans sa première configuration,
- les figures 5, 6 et 7 représentent, schématiquement, en coupe partielle et en vue perspective, un mode de réalisation particulier de la vanne objet de l'invention dans sa troisième configuration,
- les figures 8, 9 et 10 représentent, schématiquement, en coupe partielle et en vue perspective, un mode de réalisation particulier de la vanne objet de l'invention dans sa deuxième configuration,
- les figures 11 et 12 représentent, schématiquement, en coupe partielle et en vue perspective, un mode de réalisation particulier de la vanne objet de l'invention dans sa quatrième configuration, et
- la figure 13 représente, schématiquement et en vue perspective, un mode de réalisation particulier de la vanne objet de l'invention.

### DESCRIPTION DETAILLÉE D'UN MODE DE RÉALISATION DE L'INVENTION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

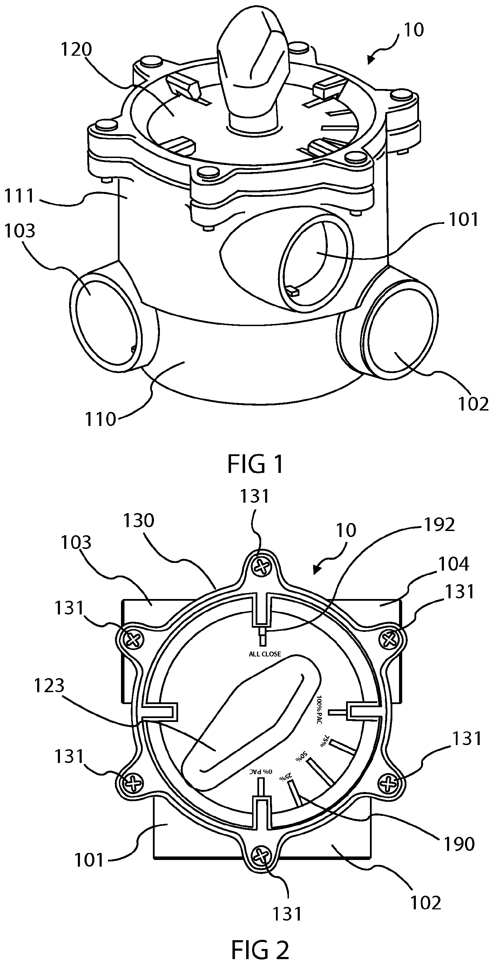

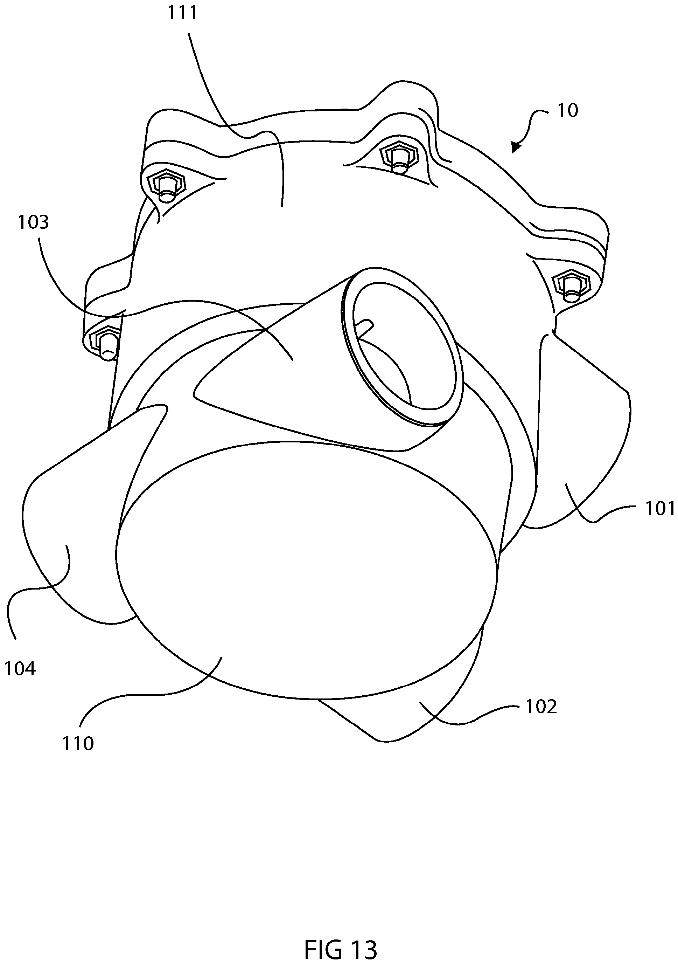

On observe en figure 1 et 13, un mode de réalisation particulier d'une vanne 10 de raccordement entre un circuit principal et un circuit monté en dérivation. La vanne 10 comporte un corps de vanne. Le corps de vanne se présente sous la forme de deux cylindres montés l'un sur l'autre. Le premier cylindre formant une partie supérieure 111 et le second cylindre une partie inférieure 110. Le diamètre de la partie supérieur 111 est supérieur à celui de la partie inférieure 110 de sorte qu'un épaulement circulaire est formé à la jonction des deux cylindres.

Le corps de vanne est percé des quatre connexions pour tube 101, 102, 103, et 104 configurés pour être raccordés à des tubes souples ou rigides adaptés à la circulation d'un fluide.

Dans des modes de réalisation, le corps de vanne est formé en matières plastiques, par exemple en polychlorure de vinyle.

La première connexion 103 pour tube, dite "entrée principale" est agencée sur la partie inférieure 110 du corps de vanne. La première connexion 103 est adaptée à être raccordée à des moyens de captage de l'eau de la piscine (non représentés). Les moyens de captage de l'eau de la piscine sont par exemples des bondes de fond ou des skimmers.

La deuxième connexion pour tube 104, dite "sortie principale", est agencée sur la partie inférieure 110 de la vanne. La deuxième connexion pour tube 104 est adaptée à être raccordée à des moyens de refoulement de l'eau (non représentés) dans la piscine, par exemple des buses.

La troisième connexion pour tube 101, dite "sortie de dérivation" est agencée sur la partie supérieure 111 du corps de vanne. La troisième connexion pour tube 101 est adaptée à être raccordée à un tuyau d'alimentation d'un circuit en dérivation, également appelé circuit secondaire.

La quatrième connexion pour tube 102, dite "retour de dérivation" est agencée sur la partie inférieure 110 du corps de vanne. La quatrième connexion pour tube 102 est adaptée à être raccordée à un tuyau de collecte de l'eau après circulation dans le circuit en dérivation.

La vanne 10 permet de dériver tout ou partie du flux circuit principal vers le circuit de dérivation. Dans des modes de réalisation de l'invention, le circuit en dérivation comporte un équipement de piscine du type moyen de chauffage, par exemple une pompe à chaleur. Dans des modes de réalisation de l'invention, l'équipement de piscine est un équipement de traitement de l'eau.

La partie inférieure 110 du corps de vanne est subdivisées en une pluralité de compartiments par une paroi verticale formée dans le corps vanne et dont le profil est en forme de croix. Trois compartiments en forme de quartiers de cylindre sont ainsi formés dans la partie inférieure du corps de vanne. Chaque compartiment est ouvert sur sa face supérieure, de sorte que, lorsqu'un compartiment se rempli de liquide, ce liquide peut déborder vers un compartiment adjacent.

De plus, chaque compartiment est percé sur sa périphérie extérieure par l'une des connexions pour tubes parmi l'entrée principale 103, la sortie principale 104 et le retour de dérivation 102.

La vanne 10 de raccordement comporte en outre un organe de commande 120 monté mobile en rotation dans la partie supérieure 111 du corps de vanne. L'organe de commande 120 est de forme cylindrique et de plus petite dimension que la partie supérieure 111 du corps de vanne.

La surface supérieure 121 de l'organe de commande 120 forme un disque. La surface inférieure de l'organe de commande 120 forme un quart de disque que l'on appellera obturateur 122.

Avantageusement le disque formant la face supérieure de l'organe de commande, que l'on appellera aussi disque de sélection, affleure du corps de vanne de sorte à être visible par l'utilisateur lors de la manipulation de la l'organe de commande.

Une bride 130 est monté sur la partie supérieur 111 du corps de vanne et fixée en place par une pluralité de vis 131. La bride 130 est montée de sorte à bloquer le mouvement en translation de l'organe de commande sans pour autant dissimuler le disque formant la face supérieur de l'organe de commande. Un joint assurant un lien d'étanchéité est enserré entre la bride 130 et la partie supérieure 111 du corps de vanne.

L'organe de commande 120 comporte un outre une cloison 125 montée perpendiculaire à un diamètre des disques formants les faces supérieures et inférieures de l'organe de commande 120. La cloison 125 sépare l'organe de commande en deux compartiments distincts. Parmi les deux compartiments formés, l'un est fermé sur sa face supérieure et partiellement ouvert sur sa face inférieure, la surface inférieure restante du compartiment étant occupée par l'obturateur 125. Ce compartiment comporte en outre sur sa périphérie au moins deux ouvertures de dimension proches de la connexion pour tube 101. L'autre compartiment est ouvert sur sa surface inférieure et fermé sur le restant de sa surface.

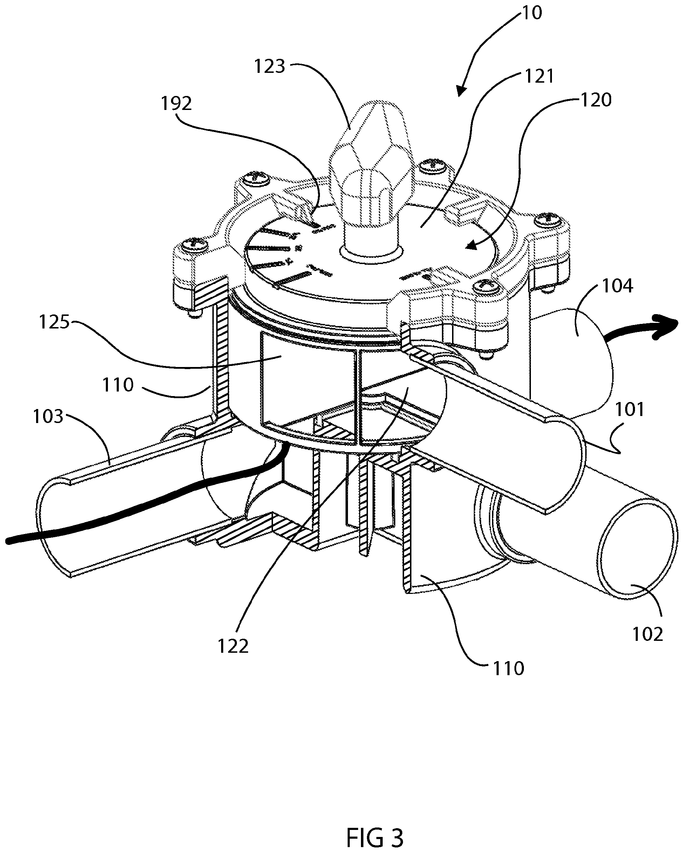

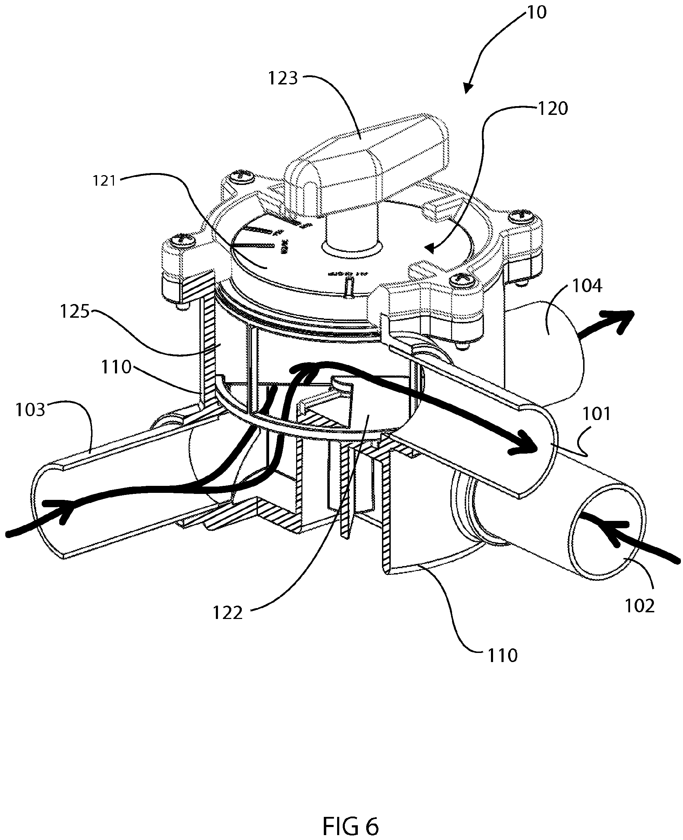

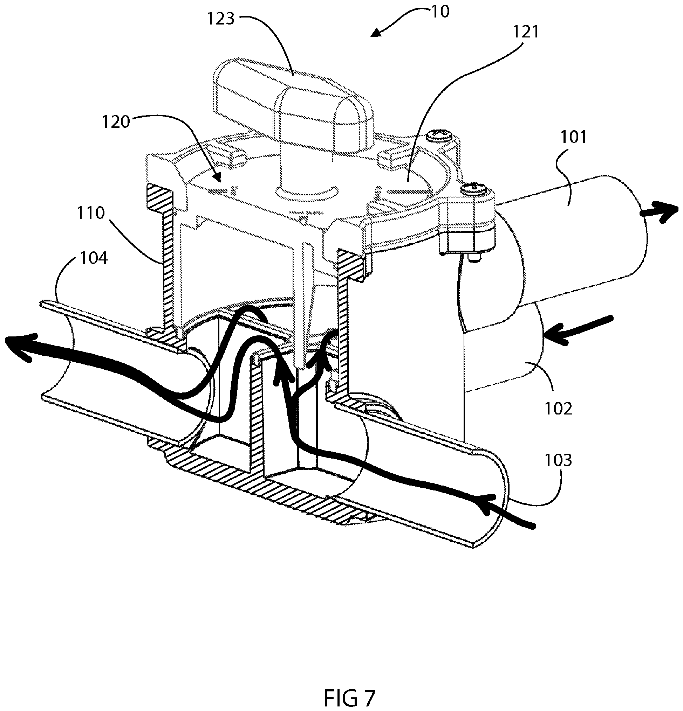

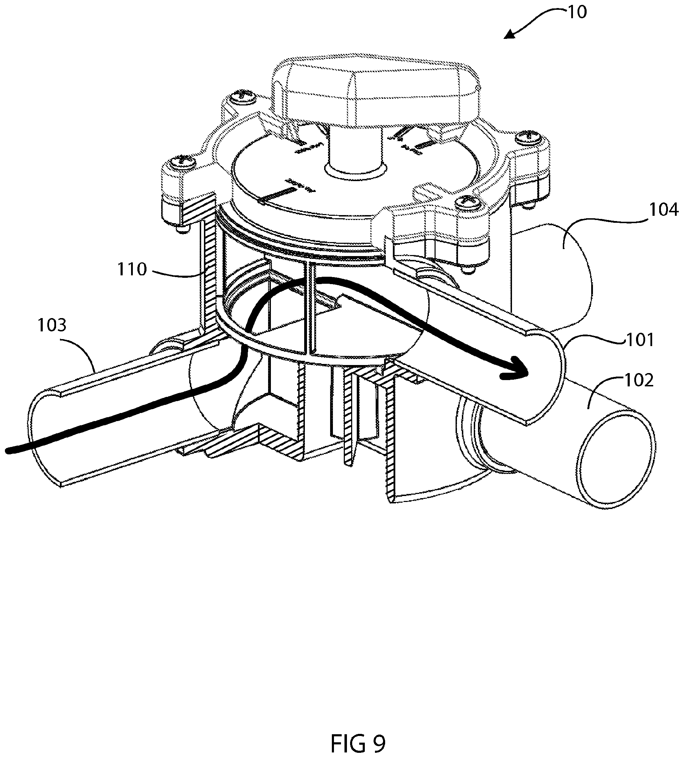

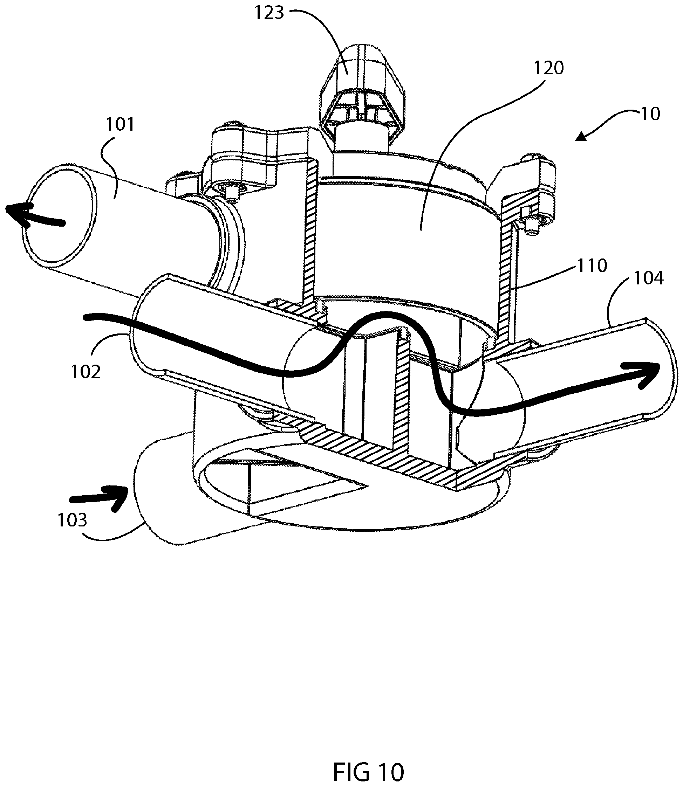

On comprendra mieux le fonctionnement de l'invention au regard des figures présentées ci-après qui illustrent différentes position de l'organe de commande 120 permettant différentes configuration de la vanne 10. A ce stade il est utile de préciser que les traits gras et noirs représentés parcourant la vanne dans les dessins en figure 3, figure 4, figure 6, figure 7, figure 9 et figure 10 illustrent la circulation d'un liquide dans la vanne.

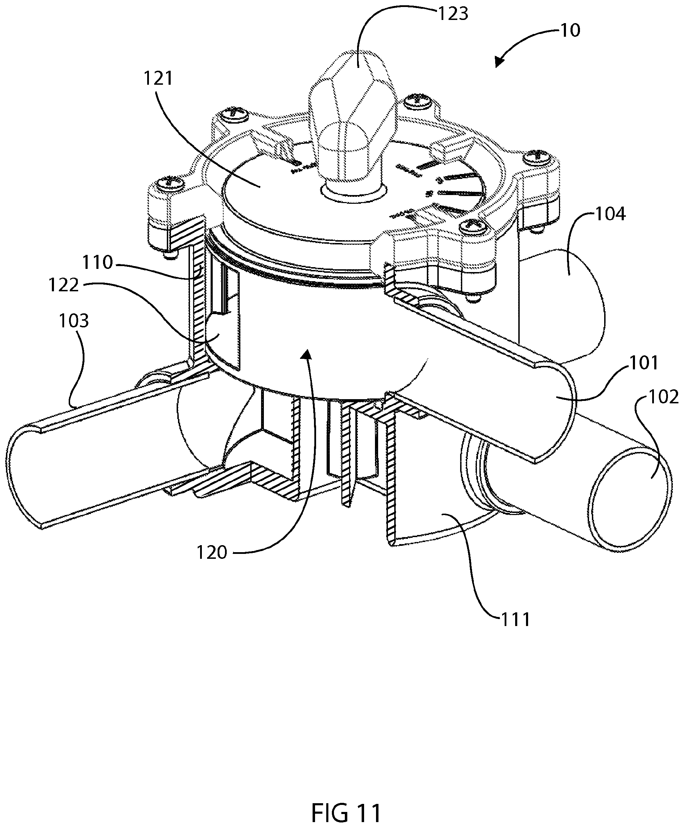

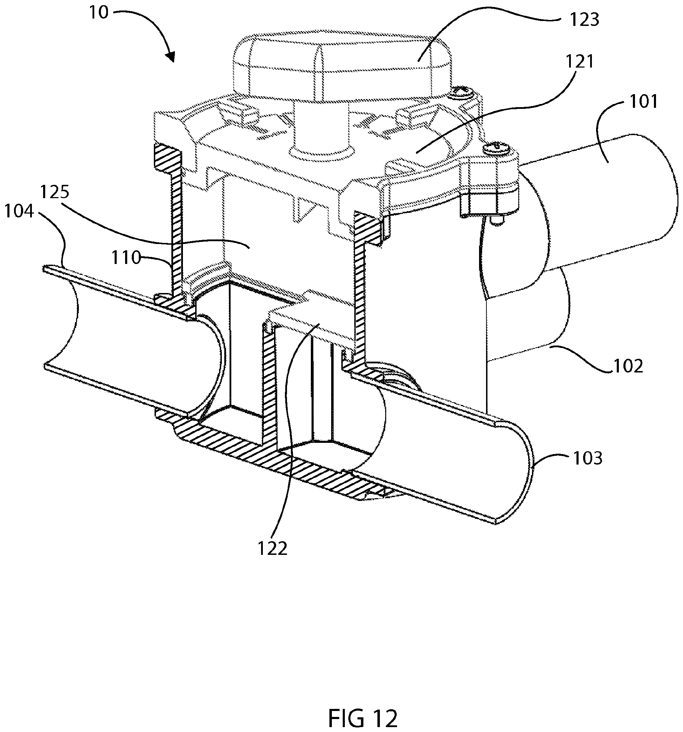

Les figures 11 et 12 illustrent la vanne 10 dans sa quatrième configuration. Dans cette configuration chacune des connexions pour tube est isolée des autres.

Dans cette quatrième configuration l'organe de commande 120 est positionné de sorte que l'obturateur 122 recouvre complètement la face supérieure du compartiment percé par l'entrée principale 103. Ainsi, le liquide arrivant dans la vanne 10 par l'entrée principale ne peut pas circuler ni vers la sortie principale ni vers la sortie de dérivation.

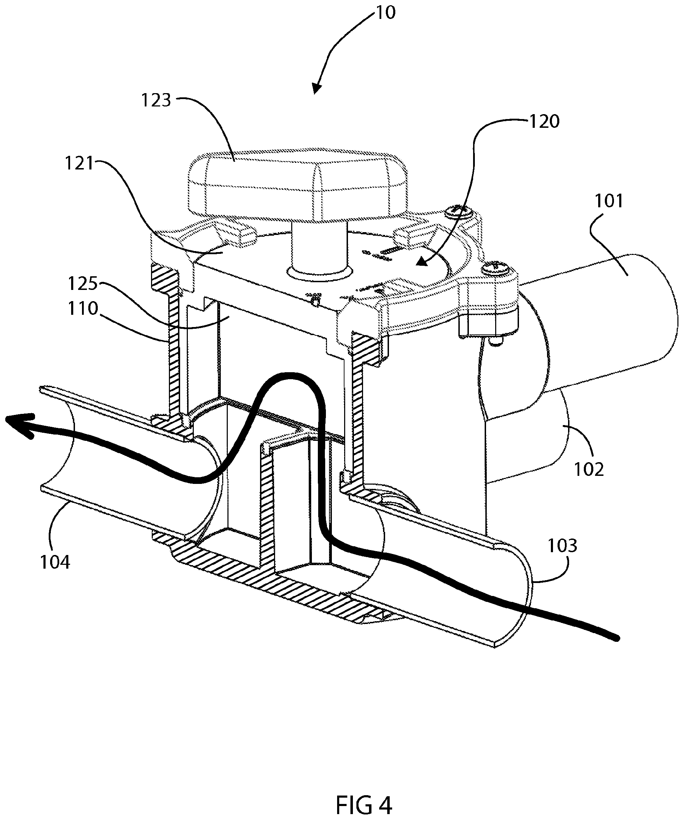

Les figures 3 et 4 illustrent la vanne 10 dans sa première configuration. La première configuration permet l'écoulement de liquide de l'entrée principale 103 vers la sortie principale 104. Dans cette configuration le positionnement de l'organe de commande oriente 100% du liquide s'écoulant de l'entrée principale vers la sortie principale par débordement du liquide depuis le compartiment percé de la connexion pour tube 103 vers le compartiment percé de la connexion pour tube 104. La cloison 125 bloque l'écoulement du liquide vers les autres connexions pour tubes.

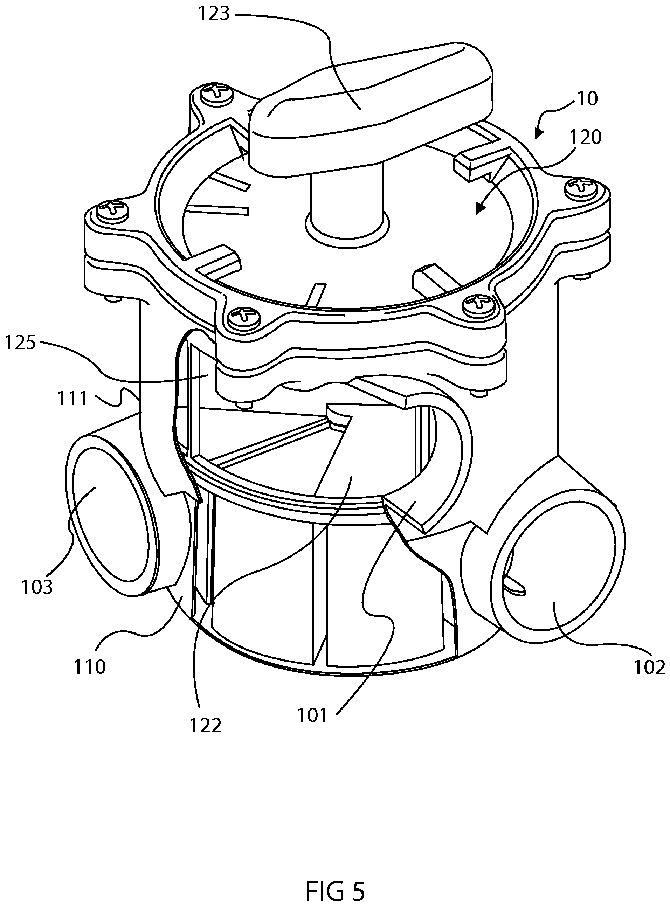

Les figures 5, 6 et 7 illustrent la vanne 10 dans sa troisième configuration. Cette configuration permet l'écoulement du liquide depuis l'entrée principale 103 à la fois vers la sortie principale 104 et vers la sortie de dérivation 101. L'organe de commande 120 Le positionné ainsi oriente environ 50% du liquide s'écoulant de l'entrée principale 103 vers la sortie principale 104 et environ 50% du liquide vers la sortie de dérivation 101. Le liquide déversé vers la sortie de dérivation 101 circule dans le circuit en dérivation avant de s'écouler vers le retour de dérivation 102. Le liquide se déversant dans le compartiment percé du retour de dérivation 102 se déverse à son tour, par débordement, dans le compartiment percé de la sortie principale 104.

On comprendra aisément au regard des figures et de la présente description que l'organe de commande 120 peut être manipulé de sorte à régler la proportion de fluide de liquide orientée vers le circuit en dérivation, la proportion de fluide restante étant orientée dans le circuit principal. Cette variation peut s'effectuer de manière continue ou séquentielle par palier.

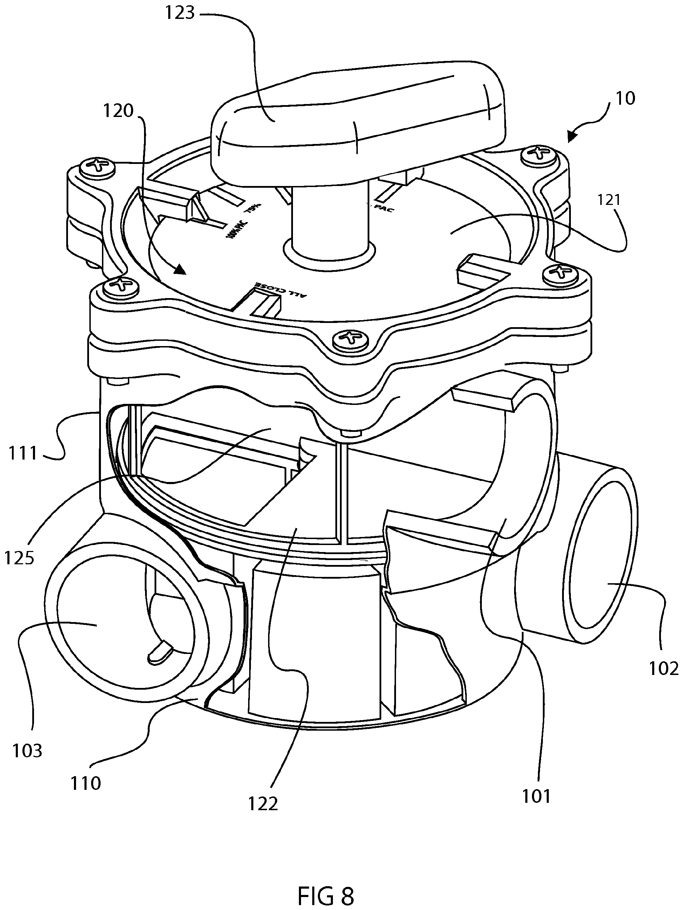

Les figures 8, 9 et 10 illustrent la vanne 10 dans sa deuxième configuration. Cette configuration permet l'écoulement de 100% du liquide depuis l'entrée principale 103 vers la sortie de dérivation 101. Le liquide déversé dans le compartiment percé de l'entrée principale 103 déborde vers le compartiment pratiqué dans de l'organe de commande 120 puis se déverse vers la sortie de dérivation 101. Le liquide déversé vers la sortie de dérivation 101 circule dans le circuit en dérivation avant de s'écouler vers le retour de dérivation 102. Le liquide se déversant dans le compartiment percé du retour de dérivation 102 se déverser à son tour, par débordement, dans le compartiment percé de la sortie principale 104.

Avantageusement, la vanne 10 comporte des moyens de blocage (non représentés) configurés pour résister à la rotation de l'organe de commande 120 à des positions prédéterminées. Ces moyens de blocages peuvent par exemple comporter des saillies positionnées sur la surface périphérique extérieure de l'organe de commande et apte à coopérer avec des cavités sur la périphérie intérieur du corps de vanne. La mise en œuvre de moyens de blocage permet la création de paliers qui seront ressentis par l'utilisateur lors de la rotation de l'organe de commande 120.

La vanne 10 comporte une poignée de préhension 123 solidaire de l'organe de commande 120 facilitant sa mise en rotation par un opérateur.

Dans des modes de réalisation la vanne 10 comporte au moins un indicateur visuel 190 de la position de l'organe de commande 120. L'indicateur visuel 190 présent sur la face supérieure 121 de l'organe de commande 120 coopère avec un second indicateur visuel fixe 192 formé par une saillie triangulaire dans la bride 130. L'alignement de l'indicateur porté par la bride avec l'indicateur porté par l'organe de commande informe l'utilisateur de la vanne de la position actuelle de l'organe de commande et donc de la configuration dans laquelle la vanne se trouve. Dans un exemple de réalisation, illustré en figure 2, les indicateurs visuels suivants sont présents sur l'organe de commande 120:
- un indicateur indiquant que la vanne 10 est dans la première configuration dans laquelle une première connexion pour tube, dite "entrée principale", est mise en relation avec uniquement une deuxième connexion pour tube, dite "sortie principale",
- un indicateur indiquant que la vanne 10 est dans la deuxième configuration dans laquelle l'entrée principale est mise en relation avec une troisième connexion pour tube, dite "sortie de dérivation", et une quatrième connexion pour tube, dite "retour de dérivation", est mise en relation avec la sortie principale,
- une pluralité d'indicateurs indiquant que la vanne 10 est dans troisième configuration dans laquelle l'entrée principale est mise en relation à la fois avec la sortie principale, chacun de ces indicateurs précisant le pourcentage de débit orienté vers le circuit de dérivation, par exemple 25%, 50% et 75%, et
- un indicateur indiquant que la vanne 10 est dans la quatrième configuration dans laquelle chacune des connexions pour tube est isolée des autres.

Dans des modes de réalisation, la vanne 10 comporte un moyen motorisé (non illustré) assurant la rotation de l'organe de commande.

Dans des modes de réalisation, la vanne 10 comporte au moins un capteur (non illustré) mesurant une donnée physique représentative d'un état du fluide et une unité centrale pilotant le moyen motorisé en fonction de la donnée physique mesurée par le capteur.

Dans des modes de réalisation, la vanne 10 comporte des moyens de détection de la position de l'organe de commande et des moyens de transmission de la position de l'organe de commande à un serveur distant.

Dans des modes de réalisation, la vanne 10 est configurée pour être pilotée à distance par un opérateur au moyen d'un terminal portable intelligent.

## Revendications

1. Vanne (10) de raccordement, comportant au moins quatre connexions pour tube (101, 102, 103, 104) de circulation de fluide, le fluide en provenance d'une connexion pour tube dite « entrée principale » (103) se déversant dans un corps de vanne (110, 111) subdivisé en une pluralité de compartiments, l'un au moins étant relié à une connexion pour tube dite «sortie principale» (104) et l'un au moins étant relié à une connexion pour tube dite « sortie de dérivation », **caractérisé en ce que** la vanne comporte un unique organe (120) de commande comportant une ouverture qui oriente l'écoulement du fluide par mise en regard de l'ouverture avec l'un au moins des compartiments de sorte à permettre la création sélective de plusieurs configurations de canaux de communication au sein de la vanne entre certaines des connexions pour tube, dont au moins:
- une première configuration dans laquelle l'entrée principale (103), est mise en relation avec uniquement la sortie principale (104),
- une deuxième configuration dans laquelle l'entrée principale (103) est mise en relation avec la sortie de dérivation (101), et une quatrième connexion pour tube, dite "retour de dérivation" (102), est mise en relation avec la sortie principale (103), et
- une troisième configuration dans laquelle l'entrée principale (103) est mise en relation à la fois avec la sortie principale (104) et avec la sortie de dérivation (101), et le retour de dérivation (102) est mis en relation avec la sortie principale (104).

2. Vanne (10) de raccordement selon la revendication 1, adaptée en outre à permettre la création d'une quatrième configuration dans laquelle chacune des connexions pour tube (101, 102, 103, 104) est isolée des autres.

3. Vanne (10) de raccordement selon l'une des revendications 1 à 2, dans laquelle la troisième configuration de la vanne permet de faire varier, de manière continue ou séquentielle, la proportion du fluide provenant de l'entrée principale orienté vers la sortie de dérivation, le débit restant étant orienté vers la sortie principale.

4. Vanne (10) de raccordement selon l'une des revendications 1 à 3, dans lequel l'organe de commande (120) est monté mobile en rotation, la position angulaire de l'organe de commande (120) réglant la proportion de fluide dirigée depuis l'entrée principale (103) vers la sortie principale (104) et la proportion de fluide dérivée vers la sortie de dérivation, le fluide dérivé étant dirigé vers le retour de dérivation (104) qui se déverse à son tour dans un compartiment agencé dans le corps de vanne (110, 111) où le fluide dérivé se mélange au fluide dirigé vers la sortie principale (104).

5. Vanne (10) de raccordement selon l'une des revendications 1 à 4, dans laquelle le compartiment relié a la sortie principale et le compartiment relié à la sortie de dérivation sont montés de sorte que l'ouverture de l'organe de commande peut être positionnée chevauchante entre lesdits compartiments pour faire varier le débit orienté vers la sortie de dérivation de 0% à 100%, le débit restant étant orienté vers la sortie principale.

6. Vanne (10) de raccordement selon l'une des revendications 1 à 5, dans lequel l'organe de sélection comporte un obturateur (122) configuré pour bloquer, en coopération avec le corps de vanne (110, 111), l'écoulement du fluide lorsqu'il est positionné en regard de la connexion pour tube raccordée à l'entrée principale.

7. Vanne (10) de raccordement selon l'une des revendications 1 à 6, qui comporte une poignée (123) de préhension solidaire de l'organe de commande facilitant sa mise en rotation par un opérateur.

8. Vanne (10) de raccordement selon l'une des revendications 1 à 7, qui comporte au moins un indicateur visuel de la position de l'organe de commande.

9. Vanne (10) de raccordement selon l'une des revendications 1 à 8, qui comporte un moyen motorisé assurant la rotation de l'organe de commande.

10. Vanne (10) de raccordement selon la revendication 9 qui comporte au moins un capteur mesurant une donnée physique représentative d'un état du fluide et une unité centrale pilotant le moyen motorisé en fonction de la donnée physique mesurée par le capteur.

11. Vanne (10) de raccordement selon l'une des revendications 1 à 10, qui comporte des moyens de transmission de la position de l'organe de commande (120) à un serveur distant.

12. Vanne (10) de raccordement selon l'une des revendications 9 à 11, pilotée à distance par un opérateur au moyen d'un terminal portable intelligent.

13. Piscine comportant un bassin, des moyens de captage de l'eau et des moyens de refoulement de l'eau dans le bassin, un circuit hydraulique principal faisant circuler l'eau au travers d'une unité de filtration au moyen d'une pompe, ladite piscine comportant en outre un circuit hydraulique secondaire d'alimentation d'un équipement de piscine monté en dérivation sur le circuit principal au moyen d'une vanne de raccordement selon l'une des revendications 1 à 12.

## Patentansprüche

1. Verbindungsventil (10), aufweisend mindestens vier Anschlüsse für ein Fluidzirkulationsrohr (101, 102, 103, 104), wobei sich das Fluid von einem Rohranschluss, bezeichnet als "Haupteinlass" (103), in einen Ventilkörper (110, 111) ergießt, der in eine Vielzahl von Kammern unterteilt ist, wobei mindestens eine mit einem Rohranschluss, bezeichnet als "Hauptauslass" (104), verbunden ist, und mindestens eine mit einem Rohranschluss, bezeichnet als "Umleitungsauslass", verbunden ist, **dadurch gekennzeichnet, dass** das Ventil ein einziges Steuerorgan (120) aufweist, aufweisend eine Öffnung, die das Fließen des durch Gegenüberstellen der Öffnung gegenüber mindestens einer der Kammern derart lenkt, dass die selektive Bildung mehrerer Kommunikationskanalkonfigurationen innerhalb des Ventils zwischen einigen der Rohranschlüsse gestattet ist, davon mindestens:
- eine erste Konfiguration, wobei der Haupteinlass (103) nur mit dem Hauptauslass (104) in Verbindung gesetzt ist,
- eine zweite Konfiguration, wobei der Haupteinlass (103) mit dem Umleitungsauslass (101) in Verbindung gesetzt ist, und ein vierter Rohranschluss, bezeichnet als "Umleitungsrückführung" (102), mit dem Hauptauslass (103) in Verbindung gesetzt ist, und
- eine dritte Konfiguration, wobei der Haupteinlass (103) sowohl mit dem Hauptauslass (104) als auch mit dem Umleitungsauslass (101) in Verbindung gesetzt ist, und die Umleitungsrückführung (102) mit dem Hauptauslass (104) in Verbindung gesetzt ist.

2. Verbindungsventil (10) nach Anspruch 1, das ferner geeignet ist, die Bildung einer vierten Konfiguration zu gestatten, wobei jeder der Rohranschlüsse (101, 102, 103, 104) von den anderen isoliert ist.

3. Verbindungsventil (10) nach einem der Ansprüche 1 bis 2, wobei die dritte Konfiguration des Ventils gestattet, den Anteil des Fluids, der vom Haupteinlass kommend zum Umleitungsauslass gelenkt wird, kontinuierlich oder sequentiell zu verändern, wobei die Restmenge zum Hauptauslass gelenkt wird.

4. Verbindungsventil (10) nach einem der Ansprüche 1 bis 3, wobei das Steuerorgan (120) rotatorisch beweglich angebracht ist, wobei die Winkelposition des Steuerorgans (120) den Fluidanteil regelt, der vom Haupteinlass (103) zum Hauptauslass (104) gelenkt wird, und den Fluidanteil, der zum Umleitungsauslass umgeleitet wird, wobei das umgeleitete Fluid zur Umleitungsrückführung (104) geleitet wird, das sich wiederum in eine Kammer ergießt, die im Ventilkörper (110, 111) eingerichtet ist, wo sich das umgeleitete Fluid mit dem zum Hauptauslass (104) gelenkten Fluid mischt.

5. Verbindungsventil (10) nach einem der Ansprüche 1 bis 4, wobei die Kammer, die mit dem Hauptauslass verbunden ist, und die Kammer, die mit dem Umleitungsauslass verbunden ist, derart angebracht sind, dass die Öffnung des Steuerorgans überlappend zwischen den Kammern positionierbar ist, um die zum Umleitungsauslass gelenkte Menge von 0 % bis 100 % zu verändern, wobei die Restmenge zum Hauptauslass gelenkt wird.

6. Verbindungsventil (10) nach einem der Ansprüche 1 bis 5, wobei das Auswahlorgan einen Verschluss (122) aufweist, der ausgelegt ist, um im Zusammenwirken mit dem Ventilkörper (110, 111) das Fließen des Fluids zu blockieren, wenn er gegenüber dem mit dem Haupteinlass verbundenen Rohranschluss positioniert ist.

7. Verbindungsventil (10) nach einem der Ansprüche 1 bis 6, das einen Handgriff (123) aufweist, der mit dem Steuerorgan fest verbunden ist, was dessen Inrotationversetzen durch einen Bediener erleichtert.

8. Verbindungsventil (10) nach einem der Ansprüche 1 bis 7, das mindestens eine visuelle Anzeige der Position des Steuerorgans aufweist.

9. Verbindungsventil (10) nach einem der Ansprüche 1 bis 8, das ein motorisiertes Mittel aufweist, das die Rotation des Steuerorgans sichert.

10. Verbindungsventil (10) nach Anspruch 9, das mindestens einen Sensor aufweist, der eine physikalische Angabe misst, die für einen Zustand des Fluids charakteristisch ist, und eine Zentraleinheit, die das motorisierte Mittel in Abhängigkeit von der von dem Sensor gemessenen physikalischen Angabe steuert.

11. Verbindungsventil (10) nach einem der Ansprüche 1 bis 10, das Übertragungsmittel der Position des Steuerorgans (120) an einen entfernten Server aufweist.

12. Verbindungsventil (10) nach einem der Ansprüche 9 bis 11, das von einem Bediener mittels eines intelligenten tragbaren Endgeräts ferngesteuert wird.

13. Schwimmbad, aufweisend ein Becken, Wassererfassungsmittel und Fördermittel des Wassers in das Becken, wobei ein Haupthydraulikkreislauf bewirkt, dass das Wasser mittels einer Pumpe durch eine Filtrationseinheit fließt, wobei das Schwimmbad ferner einen sekundären Hydraulikkreislauf zur Versorgung einer Schwimmbadausrüstung aufweist, der mittels eines Verbindungsventils nach einem der Ansprüche 1 bis 12 auf dem Hauptkreislauf umleitend angebracht ist.

## Claims

1. Connecting valve (10), which comprises at least four tube connections (101, 102, 103, 104) for the circulation of fluid, the fluid from a tube connection, the so-called "principal inlet" (103), overflowing into a valve body (110, 111) subdivided into a plurality of compartments, at least one being connected to a tube connection, the so-called "principal outlet" (104), and at least one being connected to a tube connection, the so-called "bypass outlet", **characterized in that** the valve comprises a single control member (120) comprising an opening which guides the flow of fluid by placing the opening opposite at least one of the compartments so as to permit the selective creation of several configurations of communication channels within the valve between certain tube connections, including at least:
- a first configuration in which the principal inlet (103) is placed in communication solely with the principal outlet (104),
- a second configuration in which the principal inlet (103) is placed in communication with the bypass outlet (101) and a fourth tube connection, the so-called "bypass return" (102), is placed in communication with the principal outlet (103), and
- a third configuration in which the principal inlet (103) is placed in communication both with the principal outlet (104) and with the bypass outlet (101) and the bypass return (102) is placed in communication with the principal outlet (104).

2. Connecting valve (10) as claimed in claim 1, also capable of permitting the creation of a fourth configuration in which each of the tube connections (101, 102, 103, 104) is isolated from the others.

3. Connecting valve (10) as claimed in one of claims 1 to 2, wherein the third configuration of the valve enables the proportion of fluid from the principal inlet guided toward the bypass outlet to be continuously or sequentially varied, the remaining flow being guided toward the principal outlet.

4. Connecting valve (10) as claimed in one of claims 1 to 3, wherein the control member (120) is mounted so as to be mobile in rotation, the angular position of the control member (120) controlling the proportion of fluid conducted from the principal inlet (103) to the principal outlet (104) and the proportion of fluid bypassed to the bypass outlet, the bypassed fluid being conducted to the bypass return (104) which in turn overflows into a compartment arranged in the valve body (110, 111) where the bypassed fluid is mixed with the fluid conducted to the principal outlet (104).

5. Connecting valve (10) as claimed in one of claims 1 to 4, wherein the compartment connected to the principal outlet and the compartment connected to the bypass outlet are mounted such that the opening of the control member may be positioned so as to overlap between said compartments to vary the flow guided toward the bypass outlet from 0% to 100%, the remaining flow being guided toward the principal outlet.

6. Connecting valve (10) as claimed in one of claims 1 to 5, wherein the selection member comprises a sealing member (122) which is configured, in cooperation with the valve body (110, 111), to block the flow of fluid when it is positioned opposite the tube connection connected to the principal inlet.

7. Connecting valve (10) as claimed in one of claims 1 to 6, which comprises a gripping handle (123) which is fixed to the control member and facilitates its rotation by an operator.

8. Connecting valve (10) as claimed in one of claims 1 to 7, which comprises at least one visual indicator of the position of the control member.

9. Connecting valve (10) as claimed in one of claims 1 to 8, which comprises a motorized means providing the rotation of the control member.

10. Connecting valve (10) as claimed in claim 9, which comprises at least one sensor measuring physical data representative of a state of the fluid and a central unit controlling the motorized means as a function of the physical data measured by the sensor.

11. Connecting valve (10) as claimed in one of claims 1 to 10, which comprises means for transmitting the position of the control member (120) to a remote server.

12. Connecting valve (10) as claimed in one of claims 9 to 11, controlled remotely by an operator by means of an intelligent portable terminal.

13. Swimming pool comprising a pool, means for collecting the water and means for recirculating the water into the pool, a principal hydraulic circuit circulating the water through a filtration unit by means of a pump, said swimming pool further comprising a secondary hydraulic circuit for the supply of swimming pool equipment mounted in a bypass on the principal circuit by means of a connecting valve as claimed in one of claims 1 to 12.
